# EUROPEAN PATENT SPECIFICATION

(11) **EP 1 329 356 B1**
(45) Date of publication and mention of the grant of the patent: **18.11.2009**
(21) Application number: 03001130.8
(22) Date of filing: 20.01.2003
(51) Int. Cl.: B60N 2/58, B60N 2/70, B62J 1/18, B62J 1/22, B60N 2/68, B60N 2/54, B60N 2/56, B60N 2/48, A47C 7/18, A47C 7/34

(54) **Vehicle seat**
Fahrzeugsitz
Siège pour véhicules

(30) Priority: 22.01.2002 IT TO20020062
(43) Date of publication of application: 23.07.2003
(73) Proprietor: Selmat Automotive S.p.A., Torino (IT)
(72) Inventor: Maccherrone, Michele, 10123 Torino (IT)
(74) Representative: Cerbaro, Elena

(56) References cited:
- EP-A- 1 106 424
- US-A- 1 706 585
- US-A- 3 758 159
- US-A- 5 176 860
- US-A- 5 544 942
- US-A- 5 882 073
- US-A- 5 954 403
- PATENT ABSTRACTS OF JAPAN vol. 014, no. 147 (M-0952), 20 March 1990 (1990-03-20) -& JP 02 011482 A (TOKYO SEAT KK), 16 January 1990 (1990-01-16)

## Description

The present invention relates to a vehicle seat comprising a seat portion and a backrest to which the following description refers purely by way of example.

As is known, a vehicle seat is defined by a seat portion and a backrest, each of which comprises a relatively soft or cushioned body made, in particular, of polyurethane; and a metal frame supporting the cushioned body.

The frame and cushioned body are at least partly covered with sheet material, e.g. imitation leather or fabric, to enhance the appearance of the seat and define a user supporting surface.

Though widely used, known seats of the type described above are unsatisfactory, on account of the relatively heavy weight of the metal frame, and the cushioned body material being inflammable and used in large amounts to obtain a comfortable thickness of about 150 millimeters, so that known seats do not always conform with increasingly strict automotive safety regulations.

EP1106424 discloses a seat cushion formed on a molded product composing a lower body. In particular, the molded product is placed in a mold, and a liquid polyurethane material is poured into the mold and expanded to form the seat cushion. The molded product is a polyurethane chip molded product, a polystyrene molded product, a polyethylene molded product, or a polypropylene molded product.

US5882073 discloses a passenger seat including a frame element; a vehicle anchorage structure connected to the frame element; and a seat body having a resilient material fixed with respect to the frame element.

US5176860 describes a method of making an upholstered element, wherein a cover is introduced into a mold to which it tightly adheres. The mold is closed by means of a first lid, following which a soft-foam reaction mixture is introduced into a first hollow chamber of the mold closed off by the first lid. At the end of the reaction, the soft-foam reaction mixture fills the first hollow chamber and forms a soft-foam body. Subsequently, the first lid is removed from the mold and replaced by a second lid, the soft-foam body remaining in the mold. Between the soft-foam body in the mold and the second lid, a second hollow space is formed. Subsequently, a rigid-foam reaction mixture is introduced into the second hollow chamber, which at the end of the reaction fills the second hollow chamber and forms a rigid-foam body.

US5954403 discloses a car seat comprising a frame of polyolefin foam and a core of organic fibers held together by a binder.

US3758159 describes a seat pan for a vehicle seat.
The seat pan is moulded from a rigid foam plastics and has an insert for coupling the pan to another part of the seat incorporated within the pan during the moulding process. The insert can comprise a pre-formed channel for receiving the edge portion of a seat cover or a suspension mounting.

According to US5544942, a seat padding, in particular for a motor vehicle seat backrest, includes a foam block whose support face has a recess filled with an insert of material permeable to air and/or moisture. The recess is arranged between two grooves symmetrical with respect to the vertical mid-plane of the padding. The recess is separated from the grooves by two respective shoulders made of a hard foam.

According to JP2011482, two cushion substances are placed on the upper surface of a bottom plate. The cushion substances and the bottom plate are covered with a skin material.

It is an object of the present invention to provide a vehicle seat supporting member designed to provide a straightforward, low-cost solution to the above drawbacks, while at the same time ensuring a good degree of comfort.

According to the present invention, there is provided a vehicle seat as defined in claim

A non-limiting embodiment of the invention will be described by way of example with reference to the accompanying drawings, in which:
Figure 1 shows a schematic, partly sectioned side view of an embodiment of two vehicle seat supporting members;
Figure 2 shows a schematic, partly sectioned front view of the Figure 1 supporting members;
Figure 3 shows a schematic, smaller-scale, exploded view in perspective of a variation of the Figure 1 and 2 supporting members, defining a preferred vehicle seat according to the present invention;
Figures 4 to 6 are similar to Figure 1, and show, with parts removed for clarity, further variations of the Figure 1 and 2 supporting members;
Figure 7 is similar to Figure 1, and shows a further embodiment of a supporting member.

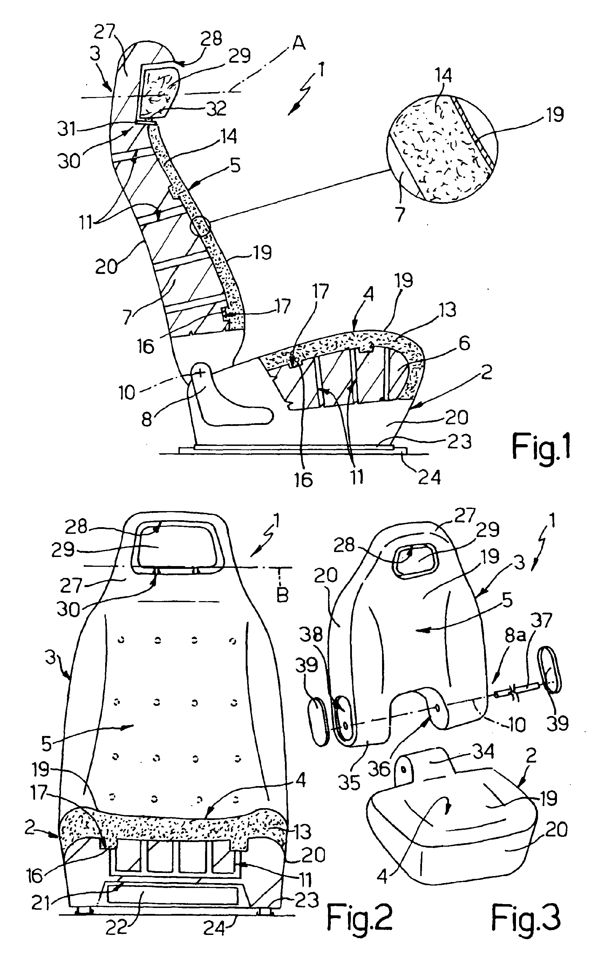

Number 1 in Figure 1 indicates a vehicle seat comprising two distinct supporting members, the term "supporting member" meaning a member defining a seat portion or a backrest for vehicle user support. The supporting members of seat 1 define a seat portion 2 and a backrest 3, which have respective user support surfaces 4, 5, and in turn comprise respective bodies 6, 7 made of self-supporting foam material, preferably polypropylene foam or a foam material known by the trade name "Noril" (registered trademark). Bodies 6, 7 are steam molded in respective molds from foaming beads and under such pressure as to obtain bodies 6, 7 of a given density - in particular, at least 30 kg/m³, and preferably ranging between 40 and 80 kg/m³ - and sufficient rigidity to provide support. In variations not shown, bodies 6, 7 are formed with holder compartments, and/or with inner weight-reducing pockets, and/or with reinforcing inserts embedded in areas subjected to most stress or weight.

Bodies 6, 7 preferably range in thickness from 100 to 150 millimeters (measured perpendicular to surfaces 4, 5), and are connected to each other by a known hinge device 8 (not described in detail) by which backrest 3 rotates with respect to seat portion 2 about a horizontal axis 10.

With reference to Figures 1 and 2, bodies 6, 7 comprise a number of inner channels 11 extending crosswise to surfaces 4, 5 to permit air flow and transpiration of the user-contact areas of surfaces 4, 5. More specifically, channels 11 communicate, in known manner not shown, with the vehicle ventilation and air-conditioning system to thermally regulate seat 1.

With reference to Figures 1 and 2, seat portion 2 and backrest 3 comprise respective cushioned bodies 13, 14, which are preferably made of flexible polyurethane foam to soften support on associated surface 4, 5, are superimposed on respective bodies 6, 7, preferably range in thickness from 20 to 30 millimeters (measured perpendicular to surfaces 4, 5), and comprise a number of projections 16 engaging respective retaining seats 17 formed in bodies 6, 7. More specifically, bodies 13, 14 are preformed and glued integrally to bodies 6, 7, or are co-molded onto bodies 6, 7.

To enhance the appearance of seat 1, bodies 13, 14 are upholstered, in known manner not described in detail, with a finish cover sheet 19, e.g. of fabric or imitation leather, defining surfaces 4, 5; and bodies 6, 7 are also upholstered laterally with finish sheet material 20, e.g. imitation leather or a thermoplastic material known by the trade name "Cartar" (registered trademark).

Seat portion 2 defines a cavity 21 formed in body 6 to house a motor reducer 22 (shown schematically) for adjusting the position of seat 1 in the passenger compartment of the vehicle, and is fitted with two slides 23 (shown schematically) fitted integrally to the base of body 6, i.e. on the opposite side to body 13, to engage respective longitudinal rails 24 on the vehicle.

Backrest 3 comprises a top portion 27, which defines a front seat 28 housing a headrest 29, and is connected to headrest 29 by an adjusting device 30 (shown schematically). Device 30 is fitted to body 7, and comprises two rails 31 enabling headrest 29 to slide in a longitudinal direction A with respect to backrest 3; and respective articulated joints 32 enabling headrest 29 to oscillate about a horizontal axis B perpendicular to direction A.

In the Figure 3 variation, device 8 is replaced by a hinge device 8a comprising an end portion 34 of body 6, and a fork-shaped portion 35 of body 7, which defines an intermediate seat 36 complementary to and housing portion 34. Portions 34, 35 are formed directly when molding bodies 6, 7, and are hinged to each other by a pin 37 extending along axis 10 and through portions 34, 35. Portion 35 defines a lateral cavity 38 closed by a cover 39 and housing a device (not shown) for adjusting the tilt of portion 35 with respect to portion 34. In variations not shown, device 8a comprises a number of axially side by side seats 36 and portions 34.

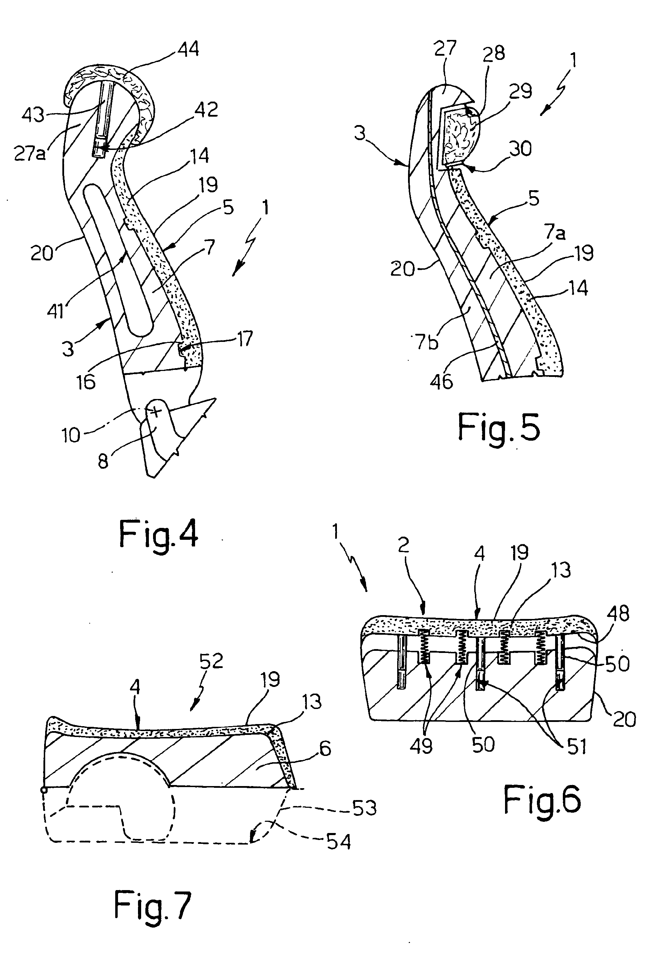

With reference to the Figure 4 variation, backrest 3 has a cavity 41 housing a lateral airbag (not shown), and, instead of portion 27, comprises a top portion 27a defining two straight dead seats 42 engaged in sliding manner by respective rods 43 supporting a headrest 44, so that headrest 44 can be adjusted in height with no need for additional guide sleeves.

In a variation not shown, body 7 has a rear seat housing a screen and/or folding table fitted to body 7 for use by rear-seat passengers.

Figure 5 shows a variation of backrest 3, which also applies to seat portion 2. Body 7 is replaced by two bodies 7a, 7b made of self-supporting foam material, and between which is interposed a reinforcing layer 46, which extends along a surface substantially parallel to, and at a distance from, surface 5, is made of glass fibers or fibers known by the trade name "kevlar" (registered trademark), and is connected, preferably glued, integrally to bodies 7a, 7b. Alternatively, prior to molding, the foaming material is impregnated directly with glass fibers or "kevlar", which are embedded inside body 7.

Figure 6 shows a variation of seat portion 2, which also applies to backrest 3. Body 13 is connected integrally to a contoured plate 48 (shown schematically), which is preferably made of injection molded plastic material, is about two millimeters thick so as to be relatively flexible, is positioned facing body 6, and is kept detached from body 6 by a number of shock-absorbing or elastic elements 49. Elements 49 enable the various areas of body 13 to deform and shift towards body 6, as a function of user weight distribution, with the guidance of a number of substantially vertical pins 50 projecting from plate 48 and engaging in sliding manner respective seats 51 formed directly in body 6.

Figure 7 shows a further embodiment defined by a motorcycle seat or saddle 52, which is made in the same way as seat portion 2, and the component parts of which are therefore indicated, where possible, using the same reference numbers as for seat portion 2. Body 6 of saddle 52 is hinged to a hollow structure 53 (shown by the dash line) of the motorcycle, preferably by hinges (not shown) embedded partly in body 6, so as to close the top of a stowage compartment 54; and a bottom portion of body 6 is contoured to hold a helmet in position inside compartment 54.

The supporting members defined by seat portion 2, backrest 3 and saddle 52 therefore have a frame defined by bodies 6, 7, which, being made of self-supporting foam material, are much lighter than known solutions featuring metal frames, yet still rigid enough to support the weight of the user without recourse to metal structures (except for slides 23 and pin 37, which substantially perform other than supporting functions).

At the same time, bodies 6, 7 enable the use of thin bodies 13, 14, by themselves being relatively deformable and assisting in providing user comfort. Therefore, given the high-temperature resistance of the foam materials of bodies 6, 7, and the small amount of polyurethane used, seat 1 and saddle 52 are of "low" or "slow" combustion and conform with even the strictest automotive safety regulations.

Moreover, seat 1 and saddle 52 transpire and, above all, are ergonomic, particularly in the lumbar supporting regions, by bodies 6, 7 easily being molded anatomically, and by the possibility of providing bodies 13, 14 varying in thickness along surfaces 4, 5 to obtain more or less rigid supporting areas.

Seat 1 and saddle 52 are relatively cheap and easy to produce, by simply involving the molding of bodies 6, 7, whereas manufacture of the metal supporting frames of known solutions involves lengthy, high-cost welding and surface treatment, such as corrosionproofing. The supporting members defined by seat portion 2, backrest 3 and saddle 52 can also be fully and easily recycled, by the materials of bodies 6, 7, 13, 14 being derived from petroleum and recycled using the same process.

The supporting members defined by seat portion 2, backrest 3 and saddle 52 are also extremely safe in terms of accident prevention, by having no metal parts or welds and by employing shock-absorbing foam material.

Finally, polypropylene is used in preference to other foam materials, by having good solvent resistance.

Clearly, changes may be made to the supporting members defined by seat portion 2, backrest 3 and saddle 52, as described and illustrated herein without, however, departing from the scope of the present claims. In particular, such supporting members may form part of seat portions or backrests of single or double seats, of front or rear seats, even of vehicles other than those indicated, e.g. trains, ships, buses and aircraft.

Finally, bodies 13, 14 and/or covers 19, 20 may be made of materials other than those indicated by way of example.

## Claims

1. Vehicle seat (1) comprising a seat portion (2) and a backrest (3); the seat portion and the backrest comprising:
- respective user supporting surfaces (4,5);
- respective cushioned bodies (13,14) associated with said supporting surfaces (4,5);
- respective frames (6,7) for supporting said cushioned bodies (13,14); said frames comprising respective supporting bodies (6,7) made of self-supporting foam material;
- a hinge device (8a) to permit rotation of said backrest (3) with respect to said seat portion (2) about a horizontal axis (10);
**characterised in that** said hinge device (8a) comprises:
- an end portion (34) of the supporting body (6) of one of said seat portion (2) and said backrest (3);
- a fork-shaped portion (35) defining at least one intermediate seat (36) in the supporting body (7) of the other of said seat portion (2) and said backrest (3); said seat (36) being complementary to said end portion (34) and housing said end portion (34), with the end portion (34) and the fork-shaped portion (35) being directly formed when molding the respective supporting bodies (6,7).

2. Vehicle seat according to claim 2, **characterised by** comprising' a hinge pin (37) extending along said horizontal axis (10) and through said end portion (34) and fork-shaped portion (35) to hinge said portions (34,35) to each other (36).

3. Vehicle seat according to claim 1 or 2,
**characterised in that** said fork-shaped portion (35) defines a lateral cavity (38) closed by a cover (39) and housing a device for adjusting the tilt of said backrest.

4. Vehicle seat according to any of the preceding claims, **characterised in that** said hinge device (8a) comprises a number of axially side by side end portions (34) and seats (36).

5. Vehicle seat according to any of the preceding claims, **characterized in that** said self-supporting foam material is polypropylene foam.

6. Vehicle seat according to any of claims from 1 to 4, **characterized in that** said self-supporting foam material is a material known by the trade name "Noril".

7. Vehicle seat according to any of the preceding claims, **characterized in that** at least one of said supporting bodies (7) is formed in two parts (7a, 7b) connected integrally to each other; reinforcing means (46) being embedded in said at least one of said supporting bodies and comprising a layer of fiber material (46) interposed between said two parts (7a, 7b).

8. Vehicle seat according to claim 7, **characterized in that** said layer of fiber material (46) extends along a surface substantially parallel to, and at a distance from said supporting surface (5).

9. Vehicle seat according to any of the preceding claims, **characterized in that** the supporting body (7) of said backrest carries guide means (30;42) for a headrest (29;44).

10. Vehicle seat according to claim 9, **characterized in that** said guide means (42) comprise two guide seats (42) formed directly inside the supporting body (7) of said backrest and engaged in sliding manner by respective rods (43) supporting the headrest (44).

## Patentansprüche

1. Fahrzeugsitz (1), umfassend einen Sitzbereich (2) und eine Rückenlehne (3); der Sitzbereich und die Rückenlehne umfassend:
- entsprechende Benutzerstützflächen (4, 5);
- entsprechende Polsterkörper (13, 14), welche mit den Stützflächen (4, 5) assoziiert sind;
- entsprechende Rahmen (6, 7) zum Stützen der Polsterkörper (13, 14); die Rahmen umfassend entsprechende Stützkörper (6, 7), welche aus selbsttragendem Schaummaterial hergestellt sind;
- eine Gelenkvorrichtung (8a), um Rotation der Rückenlehne (3) mit Bezug auf den Sitzbereich (2) um eine horizontale Achse (10) zu erlauben;
**dadurch gekennzeichnet, dass** die Gelenkvorrichtung (8a) umfasst:
- einen Endbereich (34) des Stützkörpers (6) von einem der Teile, welche sind der Sitzbereich (2) und die Rückenlehne (3);
- einen gabelförmigen Bereich (35), welcher mindestens einen Zwischensitz (36) in dem Stützkörper (7) des anderen der Teile, welche sind der Sitzbereich (2) und die Rückenlehne (3), definiert; wobei der Sitz (36) komplementär zu dem Endbereich (34) ist und den Endbereich (34) aufnimmt, wobei der Endbereich (34) und der gabelförmige Bereich (35) direkt gebildet werden, wenn die entsprechenden Stützkörper (6, 7) geformt werden.

2. Fahrzeugsitz nach Anspruch 1, **dadurch gekennzeichnet, dass** er einen Gelenkstift (37) umfasst, der sich entlang der horizontalen Achse (10) und durch den Endbereich (34) und den gabelförmigen Bereich (35) hindurch erstreckt, um die Bereiche (34, 35) miteinander gelenkig zu verbinden (36).

3. Fahrzeugsitz nach Anspruch 1 oder 2, **dadurch gekennzeichnet, dass** der gabelförmige Bereich (35) einen seitlichen Hohlraum (38) definiert, der durch eine Abdeckung (39) geschlossen wird und eine Vorrichtung zum Einstellen der Neigung der Rückenlehne aufnimmt.

4. Fahrzeugsitz nach einem der voranstehenden Ansprüche, **dadurch gekennzeichnet, dass** die Gelenkvorrichtung (8a) eine Anzahl von axial Seite-an-Seite angeordneten Endbereichen (34) und Sitzen (36) umfasst.

5. Fahrzeugsitz nach einem der voranstehenden Ansprüche, **dadurch gekennzeichnet, dass** das selbsttragende Schaummaterial Polypropylen-Schaum ist.

6. Fahrzeugsitz nach einem der Ansprüche 1 bis 4, **dadurch gekennzeichnet, dass** das selbsttragende Schaummaterial ein unter dem Markennamen "Noril" bekanntes Material ist.

7. Fahrzeugsitz nach einem der voranstehenden Ansprüche, **dadurch gekennzeichnet, dass** mindestens einer der Stützkörper (7) in zwei Teilen (7a, 7b) ausgebildet ist, welche integral miteinander verbunden sind; wobei ein Verstärkungsmittel (46) in dem mindestens einen der Stützkörper eingebettet ist und eine Lage von Fasermaterial (46) umfasst, welche zwischen den zwei Teilen (7a, 7b) zwischengeschaltet ist.

8. Fahrzeugsitz nach Anspruch 7, **dadurch gekennzeichnet, dass** sich die Lage von Fasermaterial (46) entlang einer Fläche erstreckt, welche im Wesentlichen parallel zu der Stützfläche (5) und in einem Abstand von derselben angeordnet ist.

9. Fahrzeugsitz nach einem der voranstehenden Ansprüche, **dadurch gekennzeichnet, dass** der Stützkörper (7) der Rückenlehne ein Führungsmittel (30; 42) für eine Kopfstütze (29; 44) trägt.

10. Fahrzeugsitz nach Anspruch 9, **dadurch gekennzeichnet, dass** das Führungsmittel (42) zwei Führungssitze (42) umfasst, die direkt im Inneren des Stützkörpers (7) der Rückenlehne gebildet sind und in die entsprechende Stangen (43), welche die Kopfstütze (44) halten, in gleitender Weise eingreifen.

## Revendications

1. Siège de véhicule (1) comprenant une partie de siège (2) et un dossier (3) ; la partie de siège et le dossier comprenant :
- des surfaces de support (4, 5) respectives pour l'utilisateur ;
- des corps matelassés (13, 14) respectifs associés auxdites surfaces de support (4, 5) ;
- des structures (6, 7) respectives pour supporter lesdits corps matelassés (13, 14) ; lesdites structures comprenant des corps de support (6, 7) respectifs constitués de matériau en mousse autoportant ;
- un dispositif d'articulation (8a) pour permettre la rotation dudit dossier (3) par rapport à ladite partie de siège (2) autour d'un axe horizontal (10) ;
**caractérisé en ce que** ledit dispositif d'articulation (8a) comprend :
- une partie d'extrémité (34) du corps de support (6) d'un élément parmi ladite partie de siège (2) et ledit dossier (3) ;
- une partie fourchue (35) définissant au moins un siège intermédiaire (36) dans le corps de support (7) de l'autre de ladite partie de siège (2) et dudit dossier (3) ; ledit siège (36) étant complémentaire de ladite partie d'extrémité (34) et contenant ladite partie d'extrémité (34), la partie d'extrémité (34) et la partie fourchue (35) étant formées directement lors du moulage des corps de support (6, 7) respectifs.

2. Siège de véhicule selon la revendication 1,
**caractérisé en ce qu'**il comprend un axe d'articulation (37) s'étendant le long dudit axe horizontal (10) et à travers ladite partie d'extrémité (34) et ladite partie fourchue (35) pour articuler lesdites parties (34, 35) l'une avec l'autre (36).

3. Siège de véhicule selon les revendications 1 ou 2,
**caractérisé en ce que** ladite partie fourchue (35) définit une cavité latérale (38) fermée par un couvercle (39) et contenant un dispositif pour ajuster l'inclinaison dudit dossier.

4. Siège de véhicule selon l'une quelconque des revendications précédentes, **caractérisé en ce que** ledit dispositif d'articulation (8a) comprend plusieurs parties d'extrémité (34) et sièges (36) axialement côte à côte.

5. Siège de véhicule selon l'une quelconque des revendications précédentes, **caractérisé en ce que** ledit matériau en mousse autoportant est une mousse de polypropylène.

6. Siège de véhicule selon l'une quelconque des revendications 1 à 4, **caractérisé en ce que** ledit matériau en mousse autoportant est un matériau connu sous le nom commercial "Noril".

7. Siège de véhicule selon l'une quelconque des revendications précédentes, **caractérisé en ce qu'**au moins l'un desdits corps de support (7) est formé en deux parties (7a, 7b) raccordées intégralement l'une à l'autre ; un moyen de renforcement (46) étant intégré dans ledit au moins un desdits corps de support et comprenant une couche de matière en fibres (46) intercalée entre lesdites deux parties (7a, 7b).

8. Siège de véhicule selon la revendication 7,
**caractérisé en ce que** ladite couche de matière en fibres (46) s'étend le long d'une surface sensiblement parallèle et à distance de ladite surface de support (5).

9. Siège de véhicule selon l'une quelconque des revendications précédentes, **caractérisé en ce que** le corps de support (7) dudit dossier comporte des moyens de guidage (30 ; 42) pour un appuie-tête (29 ; 44).

10. Siège de véhicule selon la revendication 9,
**caractérisé en ce que** lesdits moyens de guidage (42) comprennent deux guidages de siège (42) formés directement à l'intérieur du corps de support (7) dudit dossier et accouplés de manière coulissante par des tiges (43) respectives supportant l'appuie-tête (44).
